# EUROPEAN PATENT APPLICATION

(11) **EP 0 955 493 A1**
(43) Date of publication of application: **10.11.1999**
(21) Application number: 98830758.3
(22) Date of filing: 16.12.1998
(51) Int. Cl.: F16L 13/14

(54) **Pipe fitting for pipes**

(30) Priority: 20.04.1998 IT RM980112 U
(71) Applicant: Sabras S.r.l., 25011 Calcinato (BS) (IT)
(72) Inventor: Savardi, Lino, 25011 Calcinato (BS) (IT)
(74) Representative: Iannone, Carlo Luigi

(57) **Abstract**

The invention relates to a pipe fitting comprising a centrally holed body (1), deformable by an outer tightening action, having a first and a second open end, a tightenable element, housed within said body (1), in correspondence of said first end, or end for the insertion of the tube to be joined within the body (1) of said pipe fitting, said tightenable element (2) being provided with grasping teeth (3) for the coupling with the outer surface of the tube to be joined, and sealing means (4, 5), provided within said body (1), internally with respect to said tightening element (2).

## Description

The present invention relates to a pipe fitting.

As it is well known, various pipe fittings are known in the art, to be employed in different fields, all providing more or less advantages and drawbacks according to the specific use.

Mainly, different pipe fittings are available on the market which are always inspired to the tube to which they are destined.

Main object of the present invention is that of providing a pipe fitting allowing to obtain remarkable advantages with respect to the known pipe fittings.

Particularly, it is an object of the present invention that of providing a pipe fitting that can be employed with pipes made up of any material, even with a big diameter. Therefore, the object of the invention is that of providing an universal pipe fitting.

Another object of the present invention is that of providing a pipe fitting extremely simple under a structural point of view.

Another object of the present invention is that of providing a pipe fitting very simple under the structural point of view.

It is therefore specific object of the present invention a pipe fitting comprising a centrally holed body, deformable by an outer tightening action, having a first and a second open end, a tightenable element, housed within said body, in correspondence of said first end, or end for the insertion of the tube to be joined within the body of said pipe fitting, said tightenable element being provided with grasping teeth for the coupling with the outer surface of the tube to be joined, and sealing means, provided within said body, internally with respect to said tightening element.

Preferably, according to the invention, said pipe fitting body is made of metallic material.

Still according to the invention, said body is internally provided of an abutment for the tube to be joined.

Furthermore, according to the invention, said sealing means are comprised of two O-ring seals with the interposition of a sealing ring.

Always according to the invention, at the end of the pipe fitting a support sleeve is provided, preferably made up of metallic material.

Still according to the invention, the outer deformation of the pipe fitting body induces a permanent bending of the first end of said body.

Preferably, according to the invention, an electrical pipe wrench is employed for the deformation of the pipe fitting.

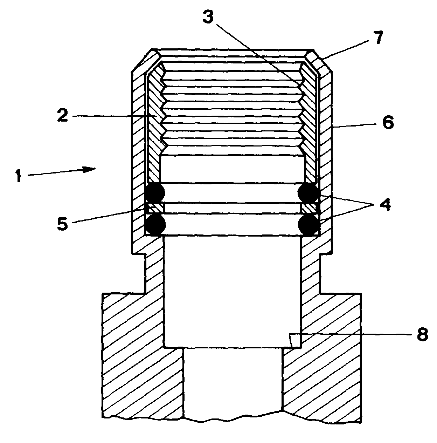

The present invention will be now described, for illustrative but not limitative purposes, according to a preferred embodiment, with particular reference to the figure of the enclosed drawing, showing a section view of the pipe fitting according to the invention.

Making now reference to the enclosed figure, it can be noted the pipe fitting according the invention comprising a metallic material body 1 provided with a sealing jaw 2, made up of metallic material.

Said jaw 2 provides grasping teeth 3 along its inner surface. It is used to ensure the mechanical sealing of the joint realised employing the pipe fitting according to the invention.

Within the pipe fitting two O-ring seals 4 are provided, and a spacing ring is provided between said seals. Said spacing ring 5 is preferably made up of polymeric material. It has the object of ensuring the positioning each other of the O-ring 4 within the pipe fitting according to the invention.

By the numeral reference 6 the portion of the body 1 is indicated upon which the pressure action is exerted, while the limb 7 is folded.

Finally, by the numeral reference 8 it is indicated the ledge of the tube on which the joint must be realised.

In order to make the joint employing the pipe fitting according to the invention, an electrically powered pipe wrench (not shown) must be used, not described in greater detail, since well known to those skilled in the art.

The tube, (not shown) will be inserted within the pipe fitting directly or after the insertion within the end to be jointed, a steel support sleeve (not shown).

Once manually placed the tube until abutting against the point 8 of the body 1 of the pipe fitting according to the invention, it is carried out the joint employing said pipe wrench.

The mechanical action of the wrench is exerted in correspondence of the zone occupied by the jaw 2: in this way, the jaw 2 is integral with the outer surface of the tube thanks to the grasping teeth 3 provided on the jaw 2.

The edge 7 (which is initially straight) of the pipe fitting according to the invention is so permanently deformed to definitely locking the inner components, i.e. the jaw 2, of the O-rings 4 and the spacing ring 5.

During the compression step O-rings 4 are not under stress since on the outer surface of the tube are preferably realised a ledge guide of the pipe wrench limiting the compression stress only to the zone occupied by the sealing jaw 2.

As it is well evident, mechanical sealing mode of the tube, i.e. from outside by the jaw 2, allow to avoid the remarkable section reductions, and the consequent charge losses, typically encountered in any kind of pipe fitting used for the polymeric or composite material tubes.

The pipe fitting according to the invention can be advantageously employed for any kind of tube, particularly for copper, plastics tubes and for composite material "multilayer tubes" (different polymers in combination with aluminium).

As already said, for the plastics material, the pipe fitting according to the invention requires the insertion of a metallic support sleeve within the end to be jointed, before its compression in such a way to prevent the squeezing of the tube wall and a proper grasping of the metallic jaw.

Furthermore, for the multilayer tubes, said sleeve will be shaped in such a way to contain a further plastics sealing preventing the contact between different materials (steel and aluminium) and the contact between water and aluminium.

Solution described does not require any particular expertise by the user and requires the use of a fixing instrument easily available on the market.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Pipe fitting characterised in that it comprises a centrally holed body, deformable by an outer tightening action, having a first and a second open end, a tightenable element, housed within said body, in correspondence of said first end, or end for the insertion of the tube to be joined within the body of said pipe fitting, said tightenable element being provided with grasping teeth for the coupling with the outer surface of the tube to be joined, and sealing means, provided within said body, internally with respect to said tightening element.

2. Pipe fitting according to claim 1, characterised in that said body is made of metallic material.

3. Pipe fitting according to one of the preceding claims, characterised in that said body is internally provided of an abutment for the tube to be joined.

4. Pipe fitting according to one of the preceding claims, characterised in that said sealing means are comprised of two O-ring seals with the interposition of a sealing ring.

5. Pipe fitting according to one of the preceding claims, characterised in that at the end of the pipe fitting a support sleeve is provided, preferably made up of metallic material.

6. Pipe fitting according to one of the preceding claims, characterised in that the outer deformation of the pipe fitting body induces a permanent bending of the first end of said body.

7. Pipe fitting according to one of the preceding claims, characterised in that an electrical pipe wrench is employed for the deformation of the pipe fitting.
